**Europäisches Patentamt**

(19) **European Patent Office**

**Office européen des brevets**

(11) Numéro de publication: **0 000 458**
**B1**

(12) **FASCICULE DE BREVET EUROPEEN**

(51) Int. Cl.³: **B 60 C 15/06**

(21) Numéro de dépôt: **78400037.4**

(22) Date de dépôt: **27.06.78**

(54) Enveloppe de pneumatique

(30) Priorité: **11.07.77 FR 7721399**

(43) Date de publication de la demande:
**24.01.79 Bulletin 79/02**

(45) Mention de la délivrance du brevet:
**03.09.80 Bulletin 80/18**

(84) Etats Contractants Désignés:
**BE CH DE GB LU NL**

(56) Documents cités:
**DE - A - 2 615 414**
**DE - B - 1 148 899**
**FR - A - 2 075 543**
**FR - A - 2 144 807**
**FR - A - 2 261 888**
**NL - A - 7 408 509**
**US - A - 3 802 478**
**US - A - 4 019 551**

(73) Titulaire: **Société Anonyme dite: Pneumatiques, Caoutchouc, Manufacture et Plastiques Kleber-Colombes**
**Place de Valmy**
**F - 92700 Colombes (FR)**

(72) Inventeur: **Balland, Michel**
**5 Square H. Berlioz**
**F - 93110 Rosny s**
**Bois (FR)**
**Moers, Daniel**
**Place Eugène Bataillon**
**F - 34000 Montpellier (FR)**

(74) Mandataire: **Lernould, René**
**6 Avenue Kléber**
**F - 75116 Paris (FR)**

Courier Press, Leamington Spa, England.

## Enveloppe de pneumatique

L'invention est relative aux enveloppes de pneumatiques, notamment aux pneus à carcasse radiale et à sommet renforcé et elle a plus specialement pour objet d'améliorer la construction de ces pneus en vue de leur conférer une meilleur endurance et un meilleur comportement routier.

Dans la construction classique actuelle, les bourrelets des pneus comprennent chacun au moins une tringle inextensible surmontée d'un profilé en caoutchouc dur ayant généralement une section triangulaire, la ou les nappes de carcasse étant repliées autour de cet ensemble tringle/profilé.

Le profilé de remplissage a pour fonction principale de réaliser une transition graduelle de la rigidité entre la partie basse très rigide du bourrelet et la partie souple et mince du flanc. Cette transition peut être dosée suivant que l'on désire accentuer telle ou telle propriété du pneu, soit par exemple la propriété de confort, soit les propriétés de comportement et de tenue de route. Cela peut être réalisé en choisissant pour le profilé de remplissage une dureté et une hauteur plus ou moins grandes. Mais ces moyens sont limités par des impératifs de fabrication et les risques d'altérer d'autres propriétés du pneu. Ainsi des profilés de remplissage en caoutchouc dur et de grande hauteur (s'élevant par exemple jusqu'à mi-flanc) sont favourables au comportement routier (stabilité de cap, réponses rapides aux changements de direction) mais ils présentent une médiocre endurance aux flexions verticales répétées des flancs de sorte qu'on observe des défaillances de pneus par rupture des profilés et des nappes de carcasse un peu au-dessus des rebords de la jante. Des profilés de remplissage de faible hauteur donnent des pneus ayant une meilleure endurance des bourrelets mais à plus mauvais comportement routier. On peut corriger ce défaut en introduisant des éléments de renfort supplémentaires tels que des "flippers" (bandelettes de tissu repliées autour de l'ensemble tringle-profilé), des bandelettes de renforcement appliqués sur les bords repliés de la carcasse ou des gommes de transition prolongeant le profilé vers le flanc. Mais ces palliatifs augmentent le nombre des éléments à assembler, le coût de fabrication et les risques de malfaçons.

Quant à la nature des profilés de remplissage il a déjà été proposé, en variante des mélanges classiques contenant de fortes proportions de charges renforçantes, d'utiliser des mélanges de caoutchouc et des fibres enchevêtrées malaxées avec la gomme (voir par exemple le DE-A 2.615.414, le NL-A 7408509 ou le DE-B 1.148.899). Ce type de mélange fibreux permet d'obtenir les duretés élevées généralement désirées pour les profilés de remplissage mais ils ne suppriment en rien les inconvénients mentionnés: si le profilé à une grande hauteur il se rompt; s'il est court il n'assure pas un bon comportement routier sans recours à des éléments additionnels de renfort.

On a trouvé maintenant que l'on peut obtenir de bien meilleurs compromis entre les principales qualités recherchées pour les pneus lorsque les bourrelets comprennent des profilés de remplissage en un mélange particulier de caoutchouc et de fibres convenablement orientées et lorsque ces profilés présentent des hauteurs appropriées.

L'invention est décrite ci-après en référence aux dessins ci-joints dans lesquels:

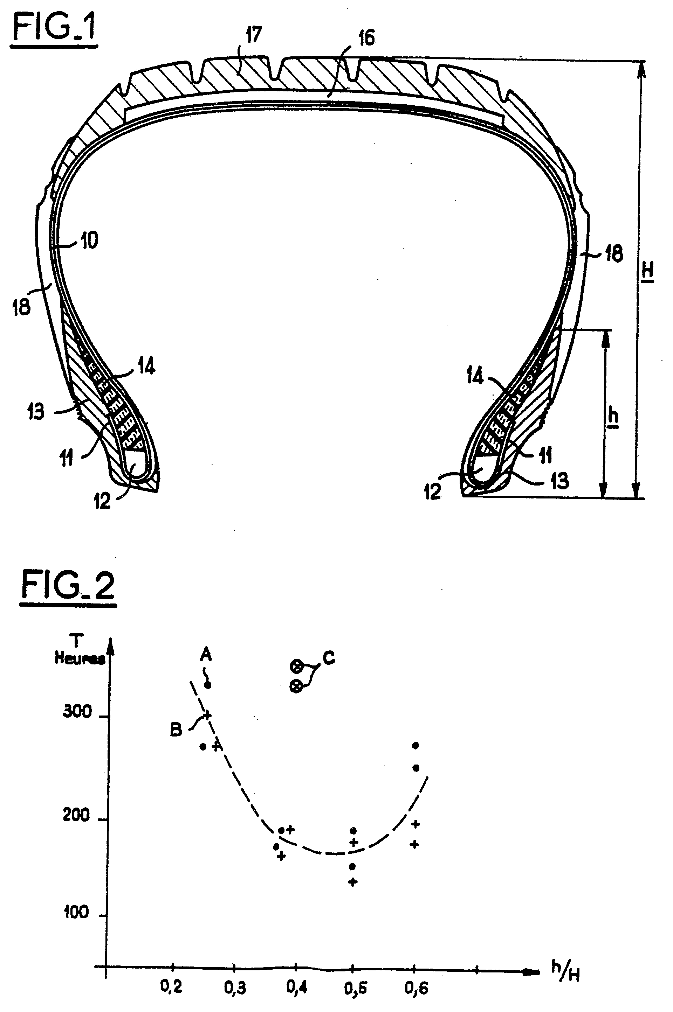

La figure 1 est une vue en coupe transversale d'un pneu selon l'invention; la figure 2 est un diagramme illustrant des résultats d'essais d'endurance de pneus de de genre.

Le pneu illustré à titre d'exemple sur la figure 1 est un pneu "Touriste". Il comprend une carcasse radiale 10 constitué d'une nappe ou de plusieurs nappes superposées de tissu caoutchouté sans trame ou à trame légère, en câblés textiles ou métalliques souples orientés suivant les plans méridiens du pneu. Les bords 11 de cette carcasse sont repliés chacun, de l'intérieur vers l'extérieur, autour de l'ensemble constitué par la tringle 12 et le profilé de remplissage 14 surmontant cette tringle. Ces bords repliés 11 sont recouverts par les gommes de jante 13 en mélange caoutchouteux résistant à l'abrasion au contact des rebords de la jante. Le sommet de la carcasse 10 est fretté par une ceinture de renforcement 16, circonférenciellement inextensible constituée par exemple par une ou plusieurs nappes de tissue caoutchouté de cordes textiles ou métalliques. Cette ceinture est recouverte par la bande de roulement 17 présentant une sculpture appropriée à l'utilisation du pneu. Les flancs de la carcasse sont recouverts par les bandes de côté 18 en mélange caoutchouteux souple.

Dans la construction des bourrelets du pneu illustré le profilé de remplissage 14 présente une section générale de forme triangulaire effilée vers le haut avec une hauteur telle que le sommet de ce profilé est situé à une distance h de la base du bourrelet comprise entre 0,2 et 0,5 fois la hauteur H de la section du pneu. Ce profilé 14 est réalisé en un mélange caoutchouteux renforcé avec des fibres courtes, ce mélange étant travaillé de façon qu'au moins une partie notable de ces fibres soient orientées principalement dans le sens radial ou méridien du pneu. Dans le pneu terminé, ce mélange présente une anisotropie marquée de ses propriétés de résistance à l'allongement, cette résistance étant dans le sens radial au moins deux fois supérieure à la résistance mesurée dans les autres directions orthogonales (rapport d'anisotropie 2/1 ou plus).

Pour la réalisation des mélanges fibreux on peut utiliser diverses teneurs en fibres ainsi que diverses sortes de fibres quant à leur nature, leur longueur et leur finesse, selon les techniques adoptées pour leur mélangeage avec la matrice en caoutchouc et pour leur conférer un degré d'orientation plus ou moins poussé, l'essentiel étant d'obtenir pour ces mélanges les caractéristiques d'anisotropie souhaitées. De bons résultats ont été obtenus avec des mélanges fibreux contenant de 10 à 75 parties de fibres en poids pour 100 parties de caoutchouc, les fibres incorporées étant des fibres de cellulose "Santoweb" de la Société Monsanto Cy ayant des longueurs comprises entre 0,5 à 3 mm et un diamètre de l'ordre de 0,01 mm. Des mélanges comprenant ces teneurs en fibres et travaillés pour orienter au moins une partie des fibres dans le sens radial du pneu permettent d'obtenir après vulcanisation des rapports d'anisotropie nettement supérieurs à 2/1 et pouvant aller jusqu'à 10/1. Certains mélanges testés présentaient une résistance à l'allongement de 100 kg/cm² à 10% d'allongement dans le sens radial et une résistance à l'allongement de 14 kg-cm² à 10% d'allongement dans le sens circonférenciel ou longitudinal du pneu.

La supériorité des résultats obtenus en utilisant des profilés de remplissage 14 en mélange fibreux anisotrope a été mise en évidence par des essais comparatifs de comportement et d'endurance de pneus de Tourisme comprenant des profilés de remplissage en divers mélanges dont les compositions sont indiquées ci-dessous (mélanges classiques orthotropes A renforcés avec des charges pulvérulentes, mélanges fibreux B à fibres plus ou moins orientées dans le sens circonférenciel du pneu, mélanges fibreux C à fibres orientées dans le sens radial du pneu) et, pour chaque type de mélange, des profilés de diverses hauteurs correspondant à des rapports h/H de 0,25, 0,40, 0,50 et 0,60.

| | *Mélange A* | *Mélange A and B* |
|---|---|---|
| Caoutchouc naturel | 100 | 50 |
| Caoutchouc butadiène/styrène | — | 50 |
| Noir renforçant | 72 | 40 |
| Soufre | 5 | 2 |
| Accélérateur | 1,5 | 1 |
| Anti-Oxygène | 2 | 2 |
| Oxyde de zinc | 5 | 3 |
| Acide stéarique | 2 | 2 |
| Huile de processing | 3 | — |
| Fibres "Santoweb" | — | 50 |

Le test utilisé pour apprécier l'endurance des bourrelets consiste à faire tourner les pneumatiques au contact d'un volant rotatif à la vitesse de 80 Km/heure sous une charge et une pression égales à 165% de la charge et de la pression normale et à mesurer le temps nécessaire à l'apparition d'une défaillance dans la zone des bourrelets.

Les résultats des essais sont illustrés graphiquement à la figure 2 qui est diagramme d'endurance donnant les temps T à partir desquels les pneus essayés présentent une défaillance les mettant hours d'usage, ces temps étant portés en fonction des rapports h/H. On voit que les pneus comprenant des profilés de remplissage 14 en mélanges A ou B non conformes à l'invention ont une bonne endurance des bourrelets seulement lorsque les hauteurs des profilés de remplissage sont inférieures à 0,3 H, une endurance moyenne lorsqu'ils présentent une hauteur supérieure à 0,5 H et une endurance nettement plus mauvaise dans la gamme des hauteurs comprises entre 0,3 et 0,5 H. Mais, comme il a été indiqué plus haut lorsque le rapport h/H est inférieur à 0,3, on constate lors des essais sur route des flottements latéraux donnant l'impression que le véhicule à une direction molle, imprécise en virage et louvoyante lors des remises en ligne à la sortie des virages; les pneus ayant des profilés de remplissage de hauteur supérieure à 0,5 H ont des temps de réponse très courts donnant l'impression que le véhicule a une direction brutale et peu progressive en entrée et sortie de virage. Dans les deux cas les pneus essayés ont des comportements désagréables pour les conducteurs moyens et pouvant être dangereux pour les conducteurs insuffisamment expérimentés.

Par contre ceux des pneus Touristes essayés ayant des profilés de remplissage 14 en mélange fibreux anisotrope C selon l'invention montrent une excellente endurance à la fatigue dans la gamme des hauteurs comprises entre 0,3 et 0,5 H pour lesquelles les pneus présentent le comportement routier le meilleur et le plus agréable à la conduite pour la majorité des conducteurs. Il s'avère ainsi que ces profilés de remplissage en mélange fibreux anisotropes présentent leur plus grande résistance à l'allongement dans le sens radial du pneu permettant d'obtenir les meilleurs compromise endurance/comportement routier.

Les pneus essayés comprenaient la construction de talon illustrée sur la figure 1. Il est à remarquer à ce sujet que cette construction de talon permet d'exclure l'usage d'autres renforts additionnels souvent utilisés et tels que des flippers en tissu enveloppant l'ensemble tringle/profilé, et des bandelettes de raidissement en tissu opposés contre les bords repliés 11 de la carcasse. La construction est donc simple et économique.

Les bords repliés 11 de la carcasse peuvent être prévus pour s'élever plus ou moins haut vers le flanc de manière à envelopper complètement ou partiellement la face extérieure du profilé de remplissage 14, cela afin d'ajuster à volonté les propriétés de comportement. Cependant cet ajustage peut aussi être fait en agissant sur les propriétés du profilés 14 en faisant varier la teneur ou les caractéristiques des fibres ou la dureté du mélange par les voies habituelles. Il est ainsi possible de réduire au minimum la longueur des bords repliés 11 de la carcasse de façon qu'ils ne dépassent pas substantiellement le niveau supérieur des tringles, ce qui permet d'économiser de la matière relativement coûteuse.

L'invention n'est pas limitée à l'application aux pneus Touristes radiaux ci-dessus décrits Elle peut être appliquée aussi à d'autres catégories que les pneus Touristes, à savoir les pneus pour poids-lourds et camionnettes, agraire, génie civil ou avion.

## Revendications

1. Pneumatique notamment à carcasse radiale (10) et à sommet renforcé, dans lequel les bourrelets comprennent chacun au moins une tringle (12) surmontée d'un profilé de remplissage (14) a section générale effilée vers le flanc, en mélange caoutchouteux renforcé par des fibres courtes, caractérisé en ce que les fibres de renforcement du profilé sont, au moins en partie, orientées dans le sens radial du pneu de façon que le mélange du profilé présente une anisotropie de ses propriétés de résistance à l'allongement, cette résistance étant dans le sens radial au moins deux fois supérieure à la résistance dans les autres directions orthogonales.

2. Pneu selon 1° et dans lequel le profilé de remplissage en mélange fibreux orienté dans le sens radial s'élève en direction du flanc jusqu'à une hauteur h comprise entre 0,2 et 0,5 fois la hauteur H de la section du pneu.

3. Pneu selon 1° dans lequel le mélange caoutchouteux du profilé de remplissage contient de 10 à 75 parties en poids de fibres courtes pour 100 parties de caoutchouc.

4. Pneu selon 1° dans lequel les fibres courtes de renforcement du profilé ont une longueur de 0,5 à 3 mm et un diamètre de l'ordre de 0,01 mm.

5. Pneu selon l'une des revendications de 1 à 4 dans lequel les bords de la carcasse sont de manière en soi connue, repliée autour de la tringle de l'intérieur vers l'extérieur, lesdits bords repliés ne dépassant pas substantiellement le niveau supérieur des tringles.

## Patentansprüche

1. Luftreifen, insbesondere Gürtelreifen mit Radial-karkasse (10) und verstärktem Reifenscheitel, wobei die Reifenwülste jeweils mindestens einen Wulstkern (12) aufweisen, über dem eine Fülleinlage (14) mit sich zur Reifenflanke hin verjüngenden Querschnitt angeordnet ist, die aus einem durch kurze Fasern verstärkten Kautschukgemisch besteht, dadurch gekennzeichnet, daß die Verstärkungsfasern der Fülleinlage mindestens teilweise radical zum Reifen ausgerichtet sind, sodaß das Kautschukgemisch der Fülleinlage eine Anisotropie der Dehnungsfestigkeit aufweist, die in Radialrichtung zumindest das zweifache der Dehnungsfestigkeit in den hierzu senkrechten Richtungen beträgt.

2. Reifen nach Anspruch 1, dadruch gekennzeichnet, daß sich die Fülleinlage aus dem faserverstärkten Kautschukgemisch mit radial ausgerichteten Fasern in Richtung auf die Reifenflanke bis auf die Höhe h ansteigt, die das 0,2 bis 0,5-fache der Höhe H des Reifenquerschnitts beträgt.

3. Reifen nach Anspruch 1, dadurch gekennzeichnet, daß das Kautschukgemisch der Fülleinlage 10 bis 75 Gewichtsteile an kurzen Fasern pro-100 Gewichtsteile Kautschuk enthält.

4. Reifen nach Anspruch 1, dadurch gekennzeichnet, daß die kurzen Fasern zur Verstärkung der Fülleinlage eine Länge von 0,5 bis 3 mm und einen Durchmesser in der Größenordnung von 0,01 mm haben.

5. Reifen nach einem der Ansprüche 1 bis 4, dadurch gekennzeichnet, daß die Karkassenränder auf an sich bekannte Weise um den Wulstkern herum von innen nach außen umgeschlagen sind, wobei die umgeschlagenen Ränder die obere Begrenzung der Wulstkerne nicht wesentlich übersteigen.

## Claims

1. Tyre, principally of the radial carcass type

(10) and with reinforced crown, in which the beads each comprise at least one bead wire (12) surmounted by a profiled filler (14) of general section tapered towards the side, of rubbery mixture reinforced by short fibres, characterised in that the reinforcing fibres of the profiled part are, at least in part, oriented in the radial direction of the tyre so that the mixture of the profiled part has an anistropy of its properties of resistance to extension, this resistance being at least twice as great in the radial direction as the resistance in the other orthogonal directions.

2. Tyre according to 1° and in which the fibrous mixture profiled filler oriented in the radial direction reaches a height $h$ comprised between 0.2 and 0.5 times the height H of the tyre section in the direction of the side.

3. Tyre according to 1°, in which the rubbery mixture of the profiled filler contains from 10 to 75 parts by weight of short fibres per 100 parts of rubber.

4. Tyre according to 1°, in which the short reinforcing fibres of the profiled part are 0.5 to 3 mm long and of the order of 0.01 mm in diameter.

5. Tyre according to one of claims 1 to 4 in which the edges of the carcass are folded, in manner known per se, round the bead wire from inside to outside, the said bent edges not going substantially beyond the upper level of the bead wires.

# FIG.1

# FIG.2